Europäisches Patentamt

European Patent Office

Office européen des brevets

(19)

(11) Numéro de publication : **0 041 901**
**B1**

(12)

# FASCICULE DE BREVET EUROPÉEN

(45) Date de publication du fascicule du brevet :
**19.12.84**

(21) Numéro de dépôt : **81400915.5**

(22) Date de dépôt : **10.06.81**

(51) Int. Cl.³ : **B 66 C   1/10, G 01 C   9/06,**
**G 01 C   9/10, B 66 C 13/04**

(54) **Dispositif de préhension pour conteneur ou analogue et comportant des détecteurs de niveau.**

(30) Priorité : **11.06.80 FR 8012955**

(43) Date de publication de la demande :
**16.12.81 Bulletin 81/50**

(45) Mention de la délivrance du brevet :
**19.12.84 Bulletin 84/51**

(84) Etats contractants désignés :
**BE DE FR GB IT NL SE**

(56) Documents cités :
**CH-A-   534 774**
**DE-A- 2 430 710**
**FR-A- 2 402 615**
**GB-A-   863 289**
**US-A- 3 985 033**

(73) Titulaire : **BRISSONNEAU ET LOTZ MARINE Société**
**anonyme dite:**
**Rue de la Métallurgie Zone Industrielle**
**F-44470 Carquefou-Nantes (FR)**

(72) Inventeur : **Charonnat, Henri**
**25, Résidence du Lac**
**F-44860 Pont Saint Martin (FR)**

(74) Mandataire : **Lejet, Christian**
**JEUMONT-SCHNEIDER Service Propriété Industrielle**
**31-32, Quai de Dion Bouton**
**F-92811 Puteaux Cedex (FR)**

**Description**

La présente invention concerne un dispositif de préhension pour conteneurs ou analogues comportant des détecteurs de niveau.

La demande de brevet FR-A-77 27 295 décrit un dispositif de préhension pour conteneurs ou analogues qui comporte un détecteur de niveau constitué de deux réservoirs à liquide communiquant entre eux par une canalisation et dans l'un desquels sont montés deux flotteurs aimantés adaptés pour fermer un contact respectif suivant que le détecteur de niveau est incliné dans un sens ou dans l'autre sur l'horizontale.

Bien que le dispositif de préhension décrit dans la demande de brevet précitée réponde dans l'ensemble aux conditions de fonctionnement requises, l'utilisation d'un détecteur de niveau à liquide présente néanmoins un certain nombre d'inconvénients. Tout d'abord, la précision de l'arrêt, aussi bien lors de la correction de l'assiette du détecteur sur la charge que lors du déplacement du point de suspension le long du dispositif de préhension, est fonction de la circulation du liquide dans les canalisations, la quantité de liquide à faire circuler étant d'autant plus grande que l'inclinaison initiale est importante. D'autre part, la viscosité du liquide varie en fonction de la température et il existe toujours des possibilités de fuites de liquide susceptibles de rendre le détecteur inopérant. On notera également que la correction d'assiette susceptible d'être assurée par ce dernier est limitée à un angle relativement faible de l'ordre de ± 2° et que des battements de fonctionnement peuvent se produire en raison de la vitesse de déplacement du liquide et des oscillations du niveau de celui-ci. Enfin, de par sa conception même, un détecteur de niveau à liquide présente un encombrement et un poids importants.

Le brevet britannique GB-A-863 289 décrit un détecteur de niveau comprenant un corps tubulaire fermé à chacune de ses extrémités dont l'alésage interne présente une piste de roulement plane ou faiblement concave, une bille adaptée pour rouler sur ladite piste de roulement vers l'une ou l'autre desdites extrémités fermées du corps tubulaire en fonction de l'inclinaison du détecteur sur l'horizontale et un capteur pour détecter la position de la bille et émettre un signal en réponse à ladite détection. Ce dispositif permet de déterminer le plan horizontal notamment dans un gyroscope. Des moyens électromagnétiques sont mis en œuvre dans ce but, mais un tel dispositif n'est absolument pas applicable à un dispositif de préhension pour porte-conteneur puisque dans ce cas, l'angle de gite initial du conteneur doit être conservé pendant toute la manœuvre.

L'invention vise donc à réaliser un dispositif de préhension équipé d'un détecteur de niveau qui permet d'éliminer les inconvénients cités précédemment.

A cet effet, l'invention a pour objet un dispositif de préhension du type comprenant un châssis suspendu en un point à un engin de manutention et destiné à être amené et mis en place sur une charge, par exemple un conteneur, des moyens pour verrouiller le châssis sur la charge, des moyens pour déplacer le point de suspension suivant une direction de référence du châssis, un premier détecteur de niveau articulé sur le châssis pour pivoter dans un plan vertical parallèle à ou contenant la direction et adapté pour fournir un signal de sortie lorsqu'il présente un défaut d'horizontalité, des moyens d'actionnement du premier détecteur, pour réaliser le pivotement du premier détecteur, des moyens d'asservissement des moyens d'actionnement au signal de sortie du premier détecteur de manière à commander, dans la position où le châssis est en place sur la charge, le basculement automatique du premier détecteur dans sa position horizontale, préalablement au hissage de la charge par le dispositif de préhension, des moyens d'inhibition des moyens d'asservissement pour maintenir, lors du hissage de la charge, le premier détecteur dans sa position relative par rapport au châssis dans laquelle il mémorise l'angle d'assiette de la charge, et des moyens sensibles au signal de sortie pour commander, lors du hissage de la charge, le déplacement du point de suspension dans une position où le défaut d'horizontalité du premier détecteur de niveau est annulé, ce dispositif de préhension étant remarquable en ce que le premier détecteur comprend un corps tubulaire, fermé à chacune de ses extrémités, dont l'alésage interne présente une piste de roulement plane ou faiblement concave, une bille métallique adaptée pour rouler sur ladite piste de roulement vers l'une ou l'autre desdites extrémités fermées du corps en fonction de l'inclinaison du détecteur sur l'horizontale et deux capteurs inductifs pour détecter la présence de la bille respectivement à l'une et l'autre desdites extrémités et émettre un signal en réponse à ladite détection, et en ce qu'il comprend un deuxième détecteur de niveau pour la limitation de l'inclinaison de la charge, ledit deuxième détecteur de niveau étant de construction analogue au premier détecteur de niveau mais présentant une piste de roulement avec une concavité supérieure à celle du premier détecteur.

D'autres caractéristiques et avantages de l'invention ressortiront de la description qui va suivre, faite en se référant aux dessins annexés donnés uniquement à titre d'exemple et sur lesquels :

La Figure 1 est une vue en élévation latérale, partiellement en coupe, d'un dispositif mémorisateur d'assiette à deux détecteurs de niveau faisant partie d'un dispositif de préhension suivant l'invention ;

La Figure 2 est une vue en élévation avant, partiellement en coupe, du dispositif mémorisateur d'assiette de la Fig. 1 ;

La Figure 3 est une vue schématique en coupe à plus grande échelle des deux détecteurs de niveau du dispositif mémorisateur d'assiette des Fig. 1 et 2 ;

La Figure 4 est un schéma électrique d'un circuit de commande simplifié d'un dispositif de préhension équipé du dispositif mémorisateur d'assiette des Fig. 1 et 2 ; et

les Figures 5 à 8 sont des vues schématiques en élévation montrant les différentes phases de fonctionnement présidant au hissage d'un conteneur hors d'une cellule d'un navire présentant une assiette importante.

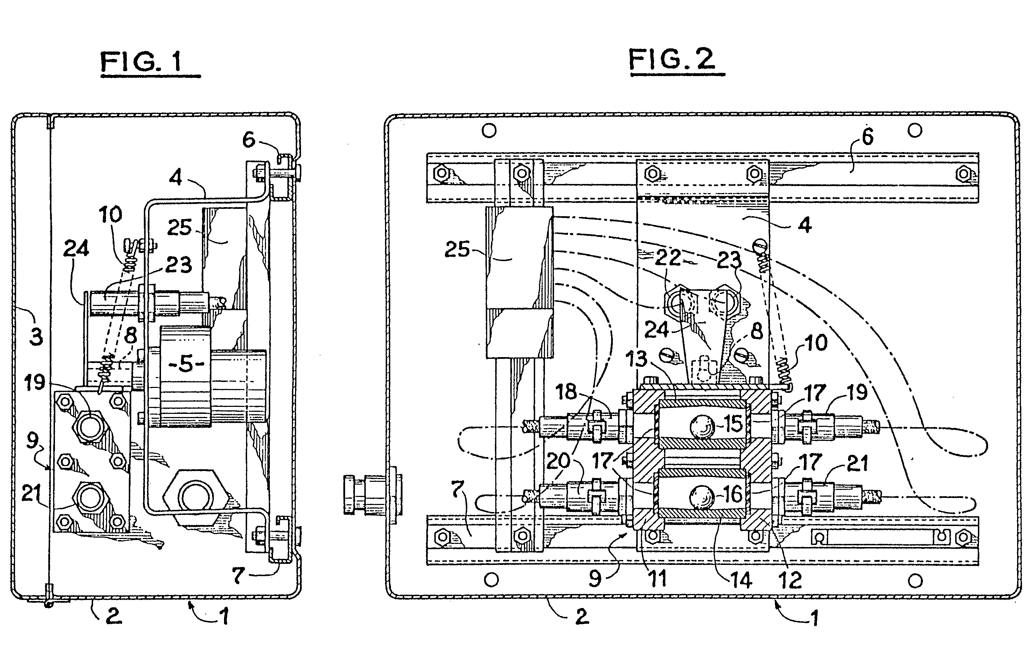

En se reportant tout d'abord aux Fig. 1 et 2, le dispositif mémorisateur d'assiette 1 comprend un coffret 2 pourvu d'une porte d'accès 3 et dans lequel une console 4 de support d'un moto-réducteur 5 est fixée à deux profilés 6 et 7.

L'arbre 8 du moto-réducteur 5 supporte un ensemble 9 de deux détecteurs de niveau et un ressort 10 est prévu entre l'ensemble 9 et la console 4 pour éliminer les jeux éventuels de montage en maintenant les engrenages du moto-réducteur toujours en pression. L'ensemble 9 est constitué essentiellement de deux chapeaux d'extrémité 11 et 12 entre lesquels sont serrés deux corps tubulaires 13 et 14 définissant des pistes de roulement pour des billes 15 et 16 respectivement. Chacun des corps 13 et 14 est fermé à ses deux extrémités par des plaquettes de caoutchouc 17 servant à délimiter les extrémités des pistes de roulement des billes 15 et 16 tout en amortissant les chocs que celles-ci peuvent provoquer lorsque l'ensemble 9 est incliné dans un sens ou dans l'autre. Par ailleurs, coaxialement aux corps 13 et 14, les chapeaux d'extrémité 11 et 12 sont percés d'alésages destinés à recevoir les extrémités de détecteurs de proximité inductifs 18 et 19 d'une part et 20 et 21 d'autre part. Les détecteurs de proximité 18 et 19 sont associés au corps 13 et fournissent un signal lorsque la bille 15 est en appui contre la plaquette 17 respective, tandis que les détecteurs de proximité 20 et 21 sont associés au corps 14 et fournissent de même un signal lorsque la bille 16 est en appui contre la plaquette 17 respective. De tels détecteurs de proximité inductifs sont tout à fait classiques et peuvent être constitués, par exemple, par ceux commercialisés par la Société TELEMECANIQUE sous la référence XSA-A05.

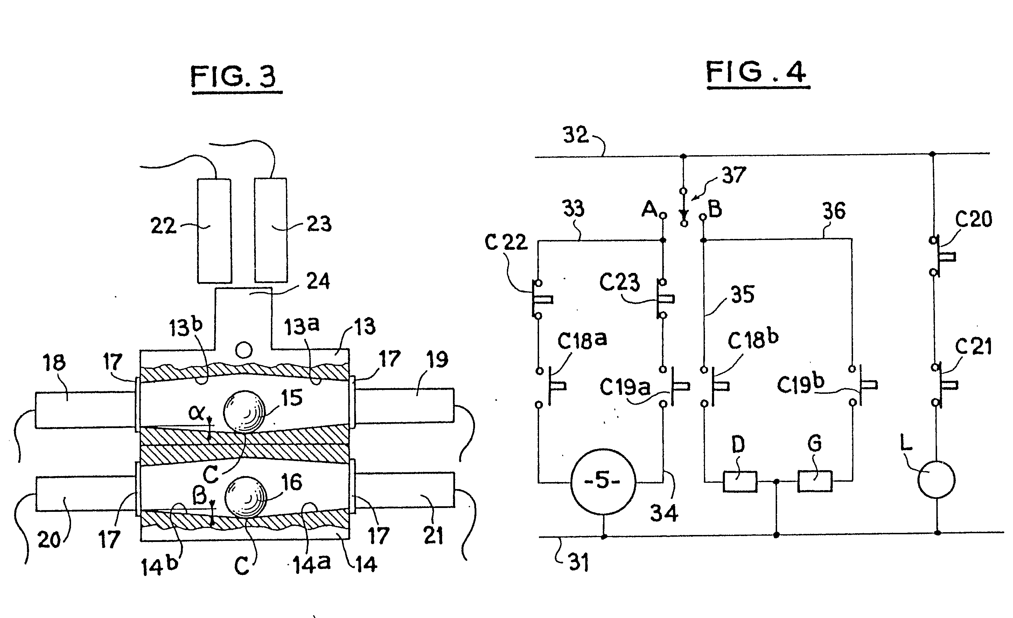

Comme le montre plus particulièrement la Fig. 3, les corps 13 et 14 définissent pour les billes 15 et 16 des pistes de roulement présentant un profil concave symétrique par rapport à un point central C placé à mi-distance des extrémités fermées par les plaquettes 17 des corps 13 et 14. Plus précisément, l'alésage interne des corps tubulaires 13 et 14 présente la forme de deux troncs de cône identiques $13^a$, $13^b$ d'une part et $14^a$, $14^b$ d'autre part qui sont assemblés par leur plus grande base. Toutefois, les troncs de cônes $13^a$ et $13^b$ n'ont pas le même angle au sommet que les troncs de cône $14^a$ et $14^b$. C'est ainsi que l'angle au sommet des troncs de cônes $13^a$ et $13^b$, qui correspond à la pente $\alpha$ de la piste de roulement de la bille 15, est très faible, par exemple de 40 minutes, de manière à permettre de détecter un défaut d'horizontalité avec un minimum d'erreur, tout en assurant que la bille est en position de repos à mi-distance des plaquettes 17 lorsque le corps 13 est parfaitement horizontal. Par contre, l'angle au sommet des troncs de cône $14^a$ et $14^b$ est nettement supérieur, par exemple de l'ordre de 5°, car il est égal à l'inclinaison maximale au-delà de laquelle les conteneurs ne doivent pas être levés pour éviter que leur contenu ne se déplace. Cet angle au sommet, c'est-à-dire l'angle $\beta$ d'inclinaison de la piste de la bille 16, est donc déterminé en fonction du résultat à obtenir.

En se référant également à nouveau aux Fig. 1 et 2, le dispositif correcteur d'assiette est complété par deux détecteurs de proximité supplémentaires 22 et 23 devant lesquels peut se déplacer une lame 24 solidaire de l'ensemble 9 et qui sert de sécurité de fin de course lorsque l'angle de rotation de l'ensemble 9 entraîné par le moto-réducteur 5 dépasse une valeur maximale prédéterminée. En effet, lorsque le coffret 2 et l'ensemble 9 sont en position horizontale, la lame 24 chevauche à la fois les détecteurs 22 et 23, et ceux-ci n'interviennent pas dans le fonctionnement du moto-réducteur 5. Par contre, comme cela sera expliqué plus en détail par la suite en regard de la Fig. 4, lorsque l'ensemble 9 bascule au point que la lame 24 découvre l'un ou l'autre des deux détecteurs 22 et 23 celui-ci provoque l'interruption de l'alimentation du moteur 5, limitant ainsi le basculement de l'ensemble 9. Enfin, comme représenté sur la Fig. 2, l'ensemble des détecteurs de proximité 18, 19, 20, 21, 22 et 23 est connecté à une boîte de connexion 25.

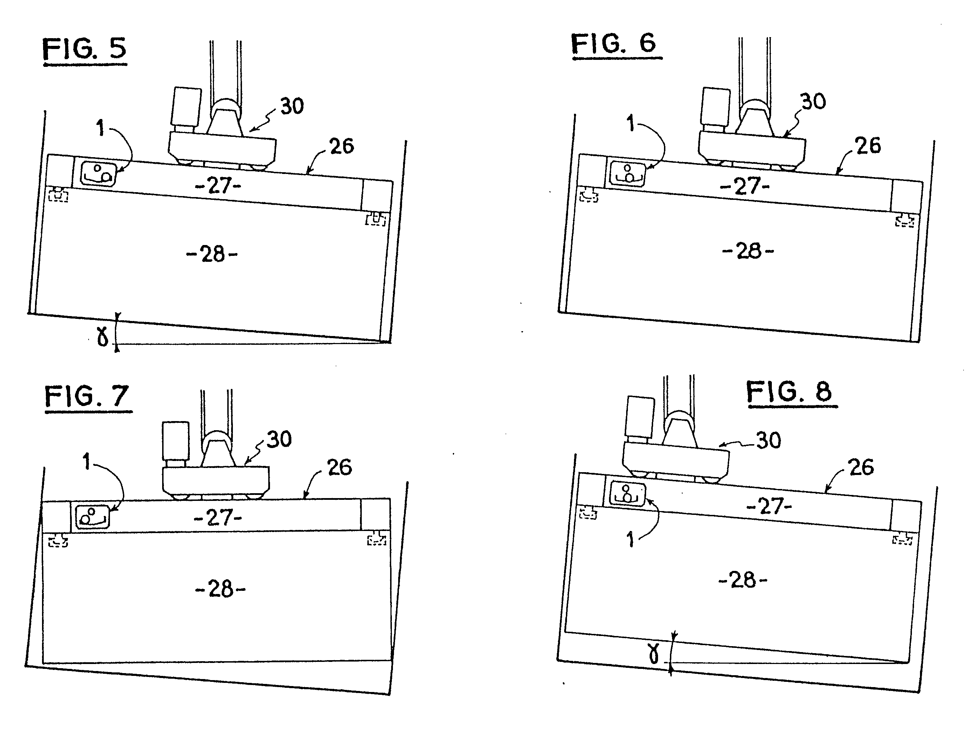

On se référera maintenant à la Fig. 5 qui montre schématiquement un dispositif correcteur d'assiette 1 monté sur un dispositif de préhension 26 comprenant un châssis 27 verrouillé sur un conteneur 28 et accroché à un engin de levage (non représenté) par l'intermédiaire d'un chariot 30 mobile le long du châssis 27 suivant une direction longitudinale de référence du châssis qui est parallèle au plan dans lequel peut basculer l'ensemble 9 du dispositif correcteur d'assiette 1. Le mouvement de translation du chariot 30 le long du châssis 27 est commandé par un vérin non représenté sur le dessin. Une description détaillée du châssis 27, du chariot 30, du vérin précité et des moyens de verrouillage du châssis 27 sur le conteneur 28 est donnée dans la demande de brevet FR-A-77 27 295 précitée à laquelle on pourra se référer, étant bien entendu que le dispositif correcteur d'assiette 1 peut être utilisé avec n'importe quel autre dispositif de préhension analogue au moyen duquel le point de suspension du châssis à l'engin de levage peut être déplacé sous la commande de signaux émis par le correcteur d'assiette 1.

La Fig. 4 est un schéma électrique simplifié de commande du dispositif de préhension de la Fig. 5. Comme le montre ce schéma, le moto-réducteur 5 est connecté d'une part directement à un conducteur d'alimentation 31 et d'autre part à un conducteur d'alimentation 32 par l'intermédiaire de deux voies parallèles 33 et 34. Par convention, on supposera que le moteur 5 tourne dans le sens horaire lorsqu'il est connecté au conducteur d'alimentation 32 par la voie 34. Les conducteurs d'alimentation 31 et 32 sont eux-mêmes reliés à une source d'alimentation électrique (non représentée). D'autre part, des électro-distributeurs D et G de commande du vérin de déplacement du chariot 30 sont connectés en parallèle dans des voies 35 et 36 entre les conducteurs d'alimentation 31 et 32. Un commutateur à deux positions A et B permet de commander la mise sous tension des voies 33 et 34 d'une part et 35 et 36 d'autre part. La voie 33 comporte, en série entre la borne A du commutateur 37 et le moteur 5, un contact normalement fermé C22 commandé par le détecteur de proximité 22 et un contact normalement ouvert C 18$^a$ commandé par le détecteur de proximité 18. De même, la voie 34 comporte en série, entre la borne A et le moteur 5, un contact normalement fermé C 23 commandé par le détecteur de proximité 23 et un contact normalement ouvert C 19$^a$ commandé par le détecteur de proximité 19. D'autre part, un contact C 18$^b$ commandé par le détecteur de proximité 18 est disposé dans la voie 35 et un contact également normalement ouvert C 19$^b$ commandé par le détecteur de proximité 19 est disposé dans la voie 36. Le circuit est complété par des contacts normalement fermés C 20 et C 21 commandés respectivement par les détecteurs de proximité 20 et 21 et disposés en série dans le circuit d'alimentation du moteur L de l'engin de levage (non représenté).

En fonctionnement, lorsque le dispositif de préhension 27 a été amené sur un conteneur 28 comme représenté à la Fig. 5 et verrouillé sur celui-ci comme décrit, par exemple, dans la demande de brevet FR-A-77 27 295 précitée, la bille 15 quitte le point C si l'inclinaison du conteneur 28 est supérieure à l'incertitude admise, à savoir l'inclinaison α de la piste de la bille 15. Si l'on suppose, comme c'est le cas à la Fig. 5, que le conteneur penche sur la droite, la bille 15 est en appui contre la plaquette d'extrémité 17 adjacente au détecteur de proximité 19. Ayant détecté la présence de la bille 15, celui-ci maintient alors le contact C 19$^a$ fermé. Le contact mobile du commutateur 37 est alors amené à la position A, ce qui a pour effet d'alimenter le moto-réducteur 5 par l'intermédiaire de la voie 34 et de le faire tourner dans le sens anti-horaire qui tend à ramener l'ensemble 9 à l'horizontale. Lorsque celui-ci arrive à 40 minutes de l'horizontale, la bille 15 commence à rouler vers le centre C de sa piste et, ayant quitté le voisinage du détecteur 19, ce dernier ouvre le contact C 19$^a$ de sorte que l'alimentation du moto-réducteur 5 est interrompue. Toutefois, le temps de réponse de l'ensemble fait qu'une légère course supplémentaire est effectuée à partir du moment où l'inclinaison est revenue à 40 minutes, de sorte que, lors de l'arrêt, l'ensemble 9 est revenu pratiquement à l'horizontale. Au cours de cette phase, les contacts C 22 et C 23 restent en principe fermés, sauf si la lame 24 a découvert le détecteur de proximité 23, ce qui signifie alors que l'ensemble 9 a basculé au-delà d'une valeur maximale autorisée.

Le dispositif de préhension 26 et le dispositif correcteur d'assiette 1 se trouvant alors dans l'état représenté à la Fig. 6, on soulève légèrement le conteneur qui prend alors une certaine assiette fonction de la position de son centre de gravité par rapport à la verticale du point de suspension. Sauf coïncidence exceptionnelle, cette assiette ne sera pas égale à son inclinaison initiale γ (Fig. 5), de sorte que la bille 15 va rouler à nouveau dans un sens ou dans l'autre suivant le sens de cette inclinaison. Si, comme représenté à la Fig. 7, le conteneur 28 tend à se redresser, la bille 15 roule vers la gauche et vient prendre appui contre la plaquette d'extrémité 17, de sorte que le détecteur de proximité 18 ferme le contact C 18$^b$. Si l'on amène alors le contact mobile du commutateur 37 dans la position B, l'électrodistributeur D est alimenté et provoque le déplacement du chariot 30 jusqu'à ce que, l'ensemble 9 étant revenu à l'horizontale, la bille quitte la plaque 17 et arrête le mouvement du chariot 30. Le conteneur 28 est alors redevenu parallèle à sa position de départ et présente une inclinaison γ sur l'horizontale.

Naturellement, si au cours de cette dernière opération l'inclinaison du conteneur 28 atteint 5°, la bille 16 vient, suivant le sens de cette inclinaison, au voisinage de l'un ou l'autre des détecteurs 20 et 21 qui ouvre alors son contact correspondant C 20 et C 21 et interrompt l'alimentation du moteur L de l'engin de levage, maintenant ainsi l'inclinaison du conteneur à 5° maximum. Bien entendu, on comprendra que les détecteurs 20, 21, 22 et 23 ne sont prévus que par sécurité et que le système pourrait fonctionner avec le seul détecteur de niveau constitué du corps 13 et de la bille 15 associés aux détecteurs de proximité 18 et 19. Le détecteur de niveau à bille suivant l'invention présente de nombreux avantages par rapport à un détecteur de niveau à liquide. C'est ainsi, tout d'abord, que la précision de l'arrêt est constante puisque la bille reste au contact du détecteur jusqu'à une inclinaison égale à celle de sa piste, à savoir 40 minutes dans l'exemple considéré. D'autre part, cette précision du fonctionnement est indépendante de la température, des inclinaisons pouvant atteindre 30° et plus étant réalisables, et la bille présente une position stable à l'horizontale, éliminant ainsi les risques de battements en fonctionnement. Enfin, le détecteur de niveau à bille suivant l'invention est d'un encombrement et d'un poids réduits.

**Revendications**

1. Dispositif de préhension du type comprenant un châssis (27) suspendu en un point à un engin de manutention et destiné à être amené et mis sur place sur une charge (28), par exemple un conteneur, des moyens pour verrouiller le châssis sur la charge, des moyens pour déplacer ledit point de suspension suivant une direction de référence du châssis, un premier détecteur de niveau (13, 15, 18, 19) articulé sur le châssis pour pivoter dans un plan vertical parallèle à ou contenant ladite direction et adapté pour fournir un signal de sortie lorsqu'il présente un défaut d'horizontalité, des moyens d'actionnement du premier détecteur, pour réaliser le pivotement dudit premier détecteur, des moyens d'asservissement desdits moyens d'actionnement au signal de sortie du premier détecteur de manière à commander, dans la position où le châssis est en place sur la charge, le basculement automatique du premier détecteur dans sa position horizontale, préalablement au hissage de la charge par ledit dispositif de préhension, des moyens d'inhibition des moyens d'asservissement pour maintenir, lors du hissage de la charge, le premier détecteur dans sa position relative par rapport au châssis dans laquelle il mémorise l'angle d'assiette de la charge, et des moyens sensibles audit signal de sortie pour commander, lors du hissage de la charge, le déplacement dudit point de suspension dans une position où le défaut d'horizontalité du premier détecteur de niveau est annulé, caractérisé en ce que ledit premier détecteur (13, 15, 18, 19) de niveau comprend un corps tubulaire (13), fermé à chacune de ses extrémités (17), dont l'alésage interne présente une piste de roulement plane ou faiblement concave, une bille (15) métallique adaptée pour rouler sur ladite piste de roulement vers l'une ou l'autre desdites extrémités fermées du corps en fonction de l'inclinaison du détecteur sur l'horizontale et deux capteurs (18, 19) pour détecteur la présence de la bille (15) respectivement à l'une et l'autre desdites extrémités (17) et émettre un signal en réponse à ladite détection, et en ce qu'il comprend un deuxième détecteur de niveau (14, 16, 20, 21) pour la limitation de l'inclinaison de la charge, ledit deuxième détecteur de niveau étant de construction analogue au premier détecteur de niveau mais présentant une piste de roulement avec une concavité supérieure à celle du premier détecteur (13, 15, 18, 19).

2. Dispositif selon la revendication 1 caractérisé en ce que lesdits premier et second détecteurs de niveau forment solidairement un ensemble (9) articulé sur un support (4), l'axe du corps tubulaire (13) du premier détecteur étant parallèle à l'axe du corps tubulaire (14) du second détecteur, et en ce que les capteurs (20, 21) du second détecteur de niveau sont agencés pour commander l'interruption du hissage de la charge (28) par ledit engin de manutention en réponse à la détection de la bille, la concavité de la piste du second détecteur de niveau (14) étant déterminée en fonction de l'inclinaison maximale autorisée de la charge (28) par rapport à l'angle d'assiette de ladite charge de manière que la détection de la bille (16) par l'un ou l'autre de ses capteurs (20, 21) corresponde à une inclinaison maximale (β) de la charge (28) par rapport à l'angle d'assiette de ladite charge.

3. Dispositif selon les revendications 1 et 2 caractérisé en ce que la concavité de la piste du premier détecteur est déterminée de manière que la détection de la bille (15) par l'un ou l'autre de ses capteurs (18, 19) corresponde à une inclinaison du premier détecteur de niveau (13, 15, 18, 19) de l'ordre de quelques dizaines de minutes d'angle environ.

4. Dispositif selon les revendications 1 ou 2 caractérisé en ce que lesdits moyens d'actionnement des détecteurs sont constitués par un motoréducteur (5) sur l'arbre (8) duquel est monté ledit ensemble des deux détecteurs.

5. Dispositif selon les revendications 2 ou 4 caractérisé en ce qu'une lame (24), solidaire de l'ensemble (9) articulé sur le support (4), lui-même solidaire du châssis, est adaptée pour osciller, en correspondance avec le pivotement dudit ensemble, devant deux détecteurs de proximité auxiliaires (22, 23), la largeur de ladite lame (24) et la position relative desdits détecteurs de proximité auxiliaires étant déterminées pour que les détecteurs de proximité auxiliaires interrompent l'alimentation desdits moyens d'actionnement (5) lorsqu'ils sont découverts individuellement par ladite lame.

**Claims**

1. Gripping device of the type comprising a frame (27) suspended at one point on a handling machine and intended to be brought to and placed on a load (28), for example a container, means for locking the frame on the load, means for displacing the said suspension point in a reference direction of the frame, a first level detector (13, 15, 18, 19) pivotably connected to the frame for pivoting in a vertical plane parallel to or containing the said direction and adapted to deliver an output signal when it shows a horizontality defect, actuating means for the first detector, for effecting the pivoting of the said first detector, means for subjecting the said actuating means to the control of the output signal of the first detector so as to bring about, in the situation where the frame is in position on the load, the automatic rocking of the first detector into its horizontal position prior to the hoisting of the load by the said gripping device, means for inhibiting the control means for the purpose of keeping the first detector, when the load is hoisted, in its relative position in relation to the frame wherein it memorises the angle of trim of the load, and means responsive to the said output signal for effecting the displacement, when the load is hoisted, of the said suspension point into a position where the horizontality defect of the first level detector is annulled, characterised in that the said first detector (13, 15, 18, 19) comprises a tubular body (13) closed at each of its ends (17), whose inside bore has a plane or slightly concave track, a metal ball (15) adapted to roll on the said track towards one or other of the said closed ends of the body in accordance with the inclination of the detector relatively to the horizontal, and two pickups (18, 19) for detecting the presence of the ball (15) respectively at each of the said ends (17) and emitting a signal in response to said detection, and in that it comprises a second level detector (14, 16, 20, 21) for limiting the inclination of the load, the said second level detector being of similar construction to the first level detector but a track with a greater concavity than that of the first detector (13, 15, 18, 19).

2. Device according to claim 1, characterised in that the said first and second level detectors constitute integrally a unit (9) pivotably connected to a support (4), the axis of the tubular body (13) of the first detector being parallel to the axis of the tubular body (14) of the second detector, and in that the pickups (20, 21) of the second level detector are arranged to effect the interruption of the hoisting of the load (28) by the said handling machine in response to the detection of the ball, the concavity of the track of the second level detector (14) being arranged in accordance with the maximum inclination allowed to the load (28) relatively to the angle of the trim of the said load so that the detection of the ball (16) by one or other of its pickups (20, 21) corresponds to an inclination of the second level detector equal to the said maximum inclination (β) of the load (28) relatively to the trim angle of the said load.

3. Device according to claims 1 and 2, characterised in that the concavity of the track of the first detector is determined such that the detection of the ball (15) by one or other of its pickups (18, 19) corresponds to an inclination of the first level detector (13, 15, 18, 19) of the order of a few dozen minutes, angle minutes, approximately.

4. Device according to claim 1 or 2, characterised in that the said actuating means of the detectors are constituted by a geared motors (5) on the shaft (8) of which there is mounted the said unit constituted by the two detectors.

5. Device according to claim 2 or 4, characterised in that a blade (24) integral with the unit (9) pivotably attached to the support (4), itself fast with the frame, is adapted to rock in correspondence with the pivoting movement of the said unit, before two auxiliary proximity detectors (22, 23), the width of the said blade (24) and the relative position of the said auxiliary proximity detectors being chosen to that the auxiliary proximity detectors interrupt supply to the said actuating means (5) when they are uncovered individually by the said blade.

**Ansprüche**

1. Greifvorrichtung vom Typ mit einem Rahmen (27), der an einem Punkt an einem Transportgerät aufgehängt und dazu bestimmt ist, über eine Last (28) bewegt und dort in Stellung gebracht zu werden, z. B. über einem Container, Mitteln zum Verriegeln des Rahmens an der Last, Mitteln zum Bewegen des Aufhängungspunktes entlang einer Bezugsrichtung des Rahmens, einem ersten Höhendetektor (13, 15, 18, 19), der an dem Rahmen angelenkt ist, um in einer senkrechten Ebene verschwenkt zu werden, die parallel zu der genannten Richtung ist oder diese enthält, zur Erzeugung eines Ausgangssignals, wenn er von einer waagerechten Lage abweicht, Mitteln zur Betätigung des ersten Detektors, um die Verschwenkung dieses ersten Detektors zu bewirken, Mitteln zur Regelung der genannten Betätigungsmittel durch das Ausgangssignal des ersten Detektors in solcher Weise, daß in derjenigen Stellung, wo sich der Rahmen über der Last in Stellung gebracht befindet, die automatische Verschwenkung des ersten Detektors in seine waagerechte Stellung gesteuert wird, und zwar vor dem Anheben der Last durch die Greifvorrichtung, Mitteln zum Inaktivieren der Regelungsmittel, um während des Anhebens der Last den ersten Detektor in seiner Relativstellung bezüglich des Rahmens zu halten, in welcher er den Trimmwinkel der Last speichert, und mit auf das Ausgangssignal ansprechenden Mitteln, um während des Anhebens der Last die Bewegung des Aufhängungspunktes in eine Stellung zu steuern, bei welcher die Abweichung des ersten Höhendetektors von der waagerechten Lage verschwindet, dadurch gekennzeichnet, daß der erste Höhendetektor (13, 15, 18, 19) einen rohrförmigen Körper (13) umfaßt, der an jedem seiner Enden (17) geschlossen ist und dessen Innenbohrung eine ebene oder leicht konkave Rollbahn aufweist, eine Metallkugel (15) umfaßt, die auf der Rollbahn gegen das eine oder das andere geschlossene Ende des Körpers in Abhängigkeit von der Neigung des Detektors gegenüber der Waagerechten rollen kann, und zwei Fühler (18, 19) umfaßt, um die Anwesenheit der Kugel (15) an dem einen bzw. anderen der genannten Enden (17) festzusellen um ein Signal ansprechend auf diese Feststellung abzugeben, und daß sie einen zweiten Höhendetektor (14, 16, 20, 21) zur Begrenzung der Neigung der Last umfaßt, wobei dieser zweite Höhendetektor analog wie der erste Höhendetektor aufgebaut ist, jedoch eine Rollbahn aufweist, die eine größere Konkavität als die des ersten Detektors (13, 15, 18, 19) besitzt.

2. Vorrichtung nach Anspruch 1, dadurch gekennzeichnet, daß der erste und der zweite Höhendetektor gemeinsam eine an einem Träger (4) angelenkte Baugruppe (9) bilden, wobei die Achse des rohrförmigen Körpers (13) des ersten Detektors parallel zur Achse des rohrförmigen Körpers (14) des zweiten Detektors ist, und daß die Fühler (20, 21) des zweiten Höhendetektors derart angeordnet sind, daß sie die Unterbrechung des Anhebens der Last (28) durch das Transportgerät ansprechend auf die Erfassung der Kugel steuern, wobei die Konkavität der Bahn des zweiten Höhendetektors (14) in Abhängigkeit von der maximalen zulässigen Neigung der Last (28) in bezug auf den Trimmwinkel der genannten Last bestimmt ist, dergestalt, daß die Erfassung der Kugel (16) durch den einen oder anderen seines Fühlers (20, 21) einer Neigung des zweiten Höhendetektors entspricht, die gleich der genannten maximalen Neigung (ß) der Last (28) in bezug auf den Trimmwinkel der genannten Last ist.

3. Vorrichtung nach den Ansprüchen 1 und 2, dadurch gekennzeichnet, daß die Konkavität des Bahn des ersten Detektors derart bestimmt ist, daß die Erfassung der Kugel (15) durch der einen oder anderen seiner Fühler (18, 19) einer Neigung des ersten Höhendetektors (13, 15, 18, 19) in der Größenordnung von etwa einigen zehn Winkelminuten entspricht.

4. Vorrichtung nach Anspruch 1 oder 2, dadurch gekennzeichnet, daß die genannten Mittel zur Betätigung der Detektoren durch einen Motor mit Untersetzungsgetriebe (5) gebildet sind, auf dessen Welle die genannte Baugruppe der zwei Detektoren angebracht ist.

5. Vorrichtung nach Anspruch 2 oder 4, dadurch gekennzeichnet, daß eine Schwingplatte (24), die fest mit der an dem Träger (4) angelenkten Baugruppe (9) verbunden ist, wobei der Träger seinerseits fest mit dem Rahmen verbunden ist, entsprechend der Verschwenkung der genannten Baugruppe vor zwei Hilfsnäherungsdetektoren (22, 23) schwingen kann, wobei die Breite der genannten Schwingplatte (24) und die relative Lage der Hilfsnäherungsdetektoren derart bestimmt sind, daß die Hilfsnäherungsdetektoren die Speisung der genannten Betätigungsmittel (5) unterbrechen, wenn sie einzeln durch die genannte Schwingplatte freigelegt werden.

FIG.1

FIG.2

FIG. 4

FIG. 3

## FIG. 5

## FIG. 6

## FIG. 7

## FIG. 8